# EUROPEAN PATENT APPLICATION

(11) **EP 3 136 232 A1**
(43) Date of publication of application: **01.03.2017**
(21) Application number: 16180336.6
(22) Date of filing: 20.07.2016
(51) Int. Cl.: G06F 9/445

(54) **DYNAMIC SERVICE EXTENSIBILITY**

(30) Priority: 28.08.2015 US 201514838692
(71) Applicant: NCR Corporation, Duluth, Georgia 30096 (US)
(72) Inventor: Anderson, Lee, Sugar Hill, GA Georgia 30518 (US); White, Joseph, Encinitas, CA California 92024 (US)
(74) Representative: MacLeod, Roderick William

(57) **Abstract**

Various embodiments herein each include at least one of systems, devices, methods, and software for dynamic service extensibility. For example, some embodiments may be implemented or directed to providing process customizations in a singular form that it utilized across all device, application, and app platforms to reduce development, integration, and maintenance expense and effort. One embodiment in the form of a method includes receiving, from an application by an agent process (118 or 126) executing on a computing device on which the application executes, an extension script call and an argument (step 302). The method then retrieves and executes the extension script in view of the argument within a script execution environment of the agent process (118 or 126) to obtain result data (step 304) and returns the result data to the application (step 306).

## Description

Development and maintenance of software systems is an expensive endeavor. To save development costs, companies often seek commercial off-the-shelf, or COTS, solutions, which they then customize, tailor, and configure to their specific needs. However, in today's modem computing environments, many software solutions, while perhaps supported by a single software system backend, are deployed to and execute upon many disparate devices of a variety of device types. Thus, the savings of COTS solutions, while perhaps significant in some regards, are limited in other regards.

Further, moving from a legacy system to a COTS system may require redevelopment of legacy system functionality in the COTS system, which can be time consuming and expensive - both of which are confounds to successful deployments.

Additionally, companies often utilize multiple software system for various purposes and integrate with computer systems of business partners. Integrating multiple software systems and with computer system of business partners, when considering the many device types to which computer systems may be deployed can be an expensive and time consuming integration and maintenance effort.

According to a first aspect of the present invention there is provided a method comprising: maintaining, in an extension flow registry, a versioned set of extension scripts executable within agent process script execution environments, a plurality of the set of extension scripts associated with application extension points; receiving, via a network interface device of a computer performing the method, an extension script retrieval request from an agent process including an application extension point identifier; retrieving, from the extension flow registry, a most current version of an extension script associated with the application extension point identifier included in the extension script retrieval request; transmitting, via the network interface device of the computer performing the method, the retrieved extension script to the agent process.

Optionally, the extension script retrieval request includes a version identifier of an extension script cached by the agent process, and the method further comprises: comparing the version identifier of the extension retrieval request to a version identifier of the most current version of the extension script associated with the application extension point identifier as maintained in extension flow registry; foregoing the retrieving and transmitting when the version identifier of the extension retrieval request is equal to the version identifier of the most current version of the extension script associated with the application extension point identifier in the extension flow registry; and transmitting, to the agent process via the network interface device of the computer performing the method, a reply indicating the extension script cached by the agent process is the current version.

Optionally, the method further comprises: identifying any additional extension scripts called within the script of the retrieved extension script; retrieving any additional extension scripts identified within the script of the retrieved extension script; and wherein transmitting the retrieved extension script includes transmitting any additional extension scripts that have been retrieved.

When the extension script includes a plurality of additional extension scripts called therein, the extension script optionally includes an ordered call of each of the plurality of additional extension scripts; and the ordered call of the plurality of additional extension scripts optionally associates an output of a prior additional extension script to an input of a subsequent additional extension script.

Optionally, the extension script, when called, receives an argument in a designated form and an output of the extension script is according to the designated form.

According to a second aspect of the present invention there is provided a system comprising: at least one network interface device; at least one processor; at least one memory; and an application stored in the at least one memory and executable by the at least one processor to execute processes including extension points, each extension point including an identifier and an extension point call to an agent process of the application, the agent process further executable by the at least one processor to provide a script execution environment and to perform data processing activities comprising: receiving an extension point call with an argument from the application; retrieving an extension script associated with the extension point call; executing the extension script in view of the argument within the script execution environment to obtain result data; and returning the result data the application.

Optionally, the argument is received in a first format; and the result data is in the first format.

Optionally, the agent process, when retrieving the extension script, retrieves the extension script from the at least one memory when the script is cached therein and from an extension flow registry at a network location via the at least one network interface device when the extension script is not cached in the at least one memory, the data processing activities of the agent processing optionally further comprising: caching the extension script in the at least one memory when retrieved from the extension flow registry.

Optionally, the agent process includes a configuration setting instructing the agent process to bypass an attempt to retrieve the extension script from the at least one memory and instead query the extension flow registry in view of a version identifier of a cached version of the extension script, when cached, to retrieve the extension script only when the at least one memory does contain a cached version of the extension script or the extension flow registry contains a more current version of the extension script than that cached in the at least one memory.

Optionally, the extension script is one of a plurality of extension scripts callable by the application at application extension points, each application extension point being associated with one extension script; and at least one application extension script includes no functional script for execution.

Optionally, the extension script includes at least one of: a call of at least one other extension script that executes within the agent process script execution environment when called; and a call, made via the at least one network interface device, of at least one service that executes on a networked computing device.

According to a third aspect of the present invention there is provided a method comprising: receiving, from an application by an agent process executing on a computing device on which the application executes, an extension script call and an argument; retrieving and executing the extension script in view of the argument within a script execution environment of the agent process to obtain result data; and returning the result data to the application.

Optionally, the argument is received in a first format; and the result data is in the first format.

Optionally, the agent process, when retrieving the extension script, retrieves the extension script from a memory of the computing device when the script is cached therein and from an extension flow registry from a network location via a network interface device of the computing device when the extension script is not cached in the memory of the computing device.

Optionally, the agent process includes a configuration setting identifying when to attempt to retrieve the extension script from the memory device and when to bypass an attempt to retrieve the extension script from the memory.

Optionally, the extension script is one of a plurality of extension scripts callable by the application at application extension points, each application extension point associated with one extension script.

Optionally, at least one application extension script includes no functional script for execution.

Optionally, the extension script includes a call of at least one other extension script that executes within the agent process script execution environment when called.

Optionally, the extension script includes a call, made via a network interface device of the computing device, of at least one service that executes on a networked computing device.

Optionally, the agent process is a module of the application.

Various embodiments herein each include at least one of systems, devices, methods, and software for dynamic service extensibility. For example, some embodiments may be implemented or directed to providing process customizations in a singular form that it utilized across all device, application, and app platforms to reduce development, integration, and maintenance expense and effort.

One embodiment in the form of a method includes receiving, from an application by an agent process executing on a computing device on which the application executes, an extension script call and an argument. The method then retrieves and executes the extension script in view of the argument within a script execution environment of the agent process to obtain result data and returns the result data to the application.

Another method embodiment includes maintaining, in an extension flow registry, a versioned set of extension scripts executable within agent process script execution environments. A plurality of the set of extension scripts are typically associated with application extension points. This method may then receive, via a network interface device of a computer performing the method, an extension script retrieval request from an agent process including an application extension point identifier. A most current version of an extension script associated with the application extension point identifier included in the extension script retrieval request is then retrieved from the extension flow registry. This method embodiment further includes transmitting, via the network interface device of the computer performing the method, the retrieved extension script to the agent process.

A further embodiment is in the form of a system. The system of such embodiments includes at least one network interface device, at least one processor, at least one memory. An application is stored in the at least one memory and is executable by the at least one processor to execute processes including extension points. Each extension point of such embodiments includes an identifier and an extension point call to an agent process of the application. The agent process is executable by the at least one processor to provide a script execution environment and to perform data processing activities. The data processing activities may include receiving an extension point call with an argument from the application and retrieving an extension script associated with the extension point call. The data processing activities further include executing the extension script in view of the argument within the script execution environment to obtain result data. The result data is then returned to the application.

These and other aspects of the present invention will be apparent from the following specific description, given by way of example, with reference to the accompanying drawings, in which:
FIG. 1 is a logical block diagram of a system, according to an example embodiment;
FIG. 2 is a block flow diagram of a method, according to an example embodiment;
FIG. 3 is a block flow diagram of a method, according to an example embodiment; and
FIG. 4 is a block diagram of a computing device, according to an example embodiment.

Various embodiments herein each include at least one of systems, devices, methods, and software for dynamic service extensibility. For example, some embodiments may be implemented or directed to providing process customizations in a singular form that are utilized across all device, application, and app platforms to reduce development, integration, and maintenance expense and effort. Some such embodiments include agents that are tailored to each specific device, application, and app platform that include script execution environments within which a singular form of a script can execute regardless of the specific device, application, and app platforms. The scripts may be called within the agent from applications and apps, such as at defined extension points within the applications or apps. An agent when receiving a script call retrieves the script from a centralized script repository when the called script is not cached in local memory or is out of date, and then executes the script within the agent script execution environment. When such a script executes, processes of other systems may be called according to various protocols previously configured within the agent and other agents that may be deployed in other instances. However, not all extension points within an application include extensions therefrom represented in an extension script. In some embodiments, an extension script may still exist, but include an empty set of extension scripting. Other embodiments simply do not have an extension script and are developed to handle a NULL return from an extension script retrieval attempt.

As there may be different device, application, and app platforms within a deploying entity, such as a company, agents are typically tailored to each of such platforms. However, the agents provide a common execution environment for scripts to execute and thereby provide a standardized mechanism through which software systems, applications, and apps may be integrated, customized, and unified to singular processes and code-bodies to leverage existing functionality on new platforms and to exploit new functionality within legacy systems.

Additionally, some embodiments provide customization, expansion, and flexibility in software systems for rapid growth and adoption of new and additional processes, promotional, and other emerging programs, technologies, and the like. For example, as technology has led people to use mobile devices, such as smartphones, tablets, and smartwatches as well as smart televisions, set top boxes, and the like, transactions previously conducted only in stores at point-of-sale (POS) terminals during business hours, are now being performed from virtually all locations and at all times of day. To conduct these transactions on a vast array of technical device platforms, each operating a different app or application, client and server code to support each technical device platform has been developed. The result is a large amount of code and functionality duplication. Some embodiments herein provide solutions that leverage commonality amongst virtually all transactions, such as adding items to a transaction for purchase, tax calculation, generating a total, receiving payment, and receipt generation.

Such embodiments include a set of defined app and application extension points that are standardized across apps and applications. These extension points are customized to provide data in a standardized form for each respective extension point, which is then passed along with a standardized extension script call to an agent, as described above and is present with or within the app or application. The agent, upon receipt of the extension script call may then retrieve a script associated with the standardized extension point from which the extension script call was received. The extension script may be retrieved by the agent from an extension script cache stored in memory on a storage device or from an extension flow repository at a network location. The extension script, once retrieved, is then executed by the agent based on the data included with the extension script call. The extension script then executes, which may include one or more calls of remote process such as to provide, retrieve, or generate transaction related data. When the extension script has been executed, the extension script provides an output, typically in the same standardized form as the data received with the extension script call, and the data is returned to the calling app or application.

Through such embodiments, great flexibility to add new and enhance existing transaction processing is provided to virtually any device and computing platform. This may include integration with new customer loyalty programs in new ways, adding mandatory ID verification in a standardized manner across all computing platforms, and the like. Further, because each script is executable within a script execution environment of an agent on each and every supported computing and device platform of an organization, script code that is written once is executable everywhere. Further, distribution of current script code is facilitated through the agents. Development and maintenance costs, efforts, and time are thereby minimized, simplified, and accelerated.

These and other embodiments are described herein with reference to the figures.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

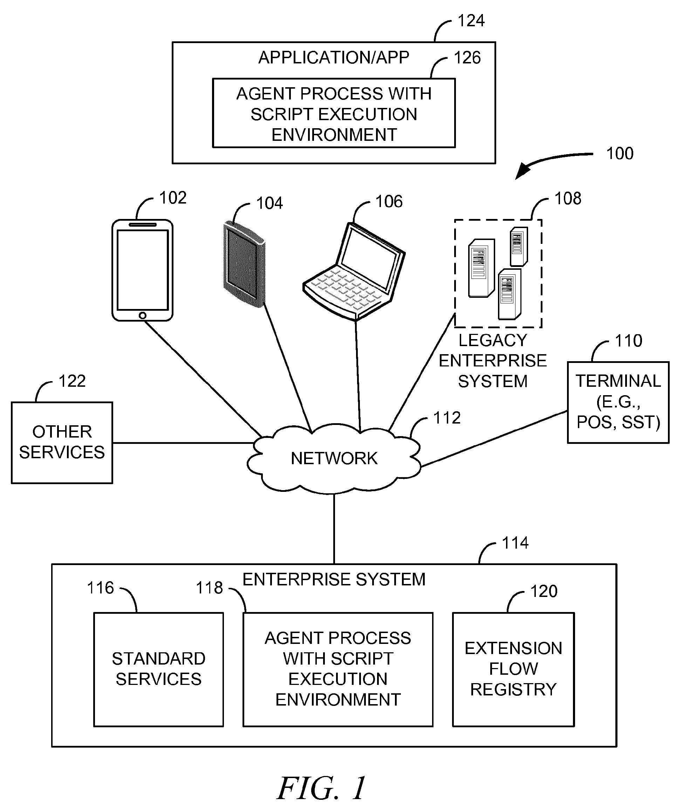

FIG. 1 is a logical block diagram of a system 100, according to an example embodiment. The system 100 is an example of a computing environment within which some embodiments may be implemented and execute. The system 100 includes a plurality of various client-types. The client-types may include one or more of mobile devices, such as smartphone 102, tablets 104, and smartwatches (not illustrated). The client-types may also include personal computers 106, legacy enterprise system 108, and terminals 110, such as POS terminals and self-service terminals (SSTs). The SSTs may include one or more of Automated Teller Machines (ATMs), Self-Service Checkouts (SSCs), self-service library checkouts, informational and shopping kiosks, and the like.

Each of the various client-types is connected to a network 112. The network 112 may be one or a combination of network-types. For example, the network may be a local-area or wide-area network, a secure network, the Internet, a wireless service provider network, a WI-FI® network, and other network types. In some embodiments, other network-types may be included as part of the network 112 or between one of the client-types and another device, such as a BLUETOOTH® or other near field communication connection between a smartphone 102 or tablet 104 and a smartwatch.

Also connected to the network 112 is an enterprise system 114. The enterprise system 114, as illustrated, provides a set of standard services 116. Standard services 116 may include web server, web service, and other data processing services as may be accessed within processes of the enterprise system 114 and by other computing systems and devices via the network 112. For example, the standard services may provide transaction processing services to apps and applications that execute on clients 102, 104, 106, 108, 110 of the various client-types. Some such services may include pricing, tax calculation, shipping estimation, customer loyalty program related, and other such services. Such services 116 in some embodiments may be accessed directed by apps, applications, and processes thereof that execute on the clients 102, 104, 106, 108, 110 and the enterprise system 114. In some embodiments and instances of other embodiments, the services 116 may be accessed by extension scripts stored by an extension flow registry 120 on a data storage device of or accessible to the enterprise system 114. The extension flow registry 120 stores scripts that are retrieved from the extension flow registry 120 by an agent process 118, 126 that is present in the enterprise system 114 and applications and apps 124 that are present and execute on the clients 102, 104, 106, 108, 110.

Extension scripts are stored by the extension flow registry 120 are centrally stored, managed, and versioned in the extension flow registry 120. Scripts are generally coded in a scripting language, such as JavaScript or other similar or derivate scripting language. The agent process 118, 126 is present either on a computing device or within an app or application 124 and includes a script execution environment, which is a form of a virtual machine within which extension scripts are executed. The agent process 118, 126 may be a part of an application or app 124 or a module added thereto. In some embodiments, the agent process 118, 126 may be added within a program of a legacy system, such as legacy enterprise system 108, or as a service that executes or is otherwise accessible within a computing environment of such legacy systems.

In some embodiments, the agent process 118, 126 receives extension script calls from the application or app 124 that is executing on a client 102, 104, 106, 108, 110. In some embodiments, extension scripts are created and callable according to a standard that may be established by app or application developers or by other groups, such as companies, industry groups, standard setting bodies, and the like. Extension scripts in such embodiments correlate to extension points included in or added to applications and apps 124. Such an extension point is a point where an extension script call is made to the agent process 118, 126 to execute an extension script of that extension point. As the extension points and the extension scripts are standardized, the calling application or app 124 provides argument data with the extension script call that is expected by the called extension script. Further, the agent process is able to properly identify and retrieve the called extension script.

When an extension script call is received by an agent process 118, 126, the agent process 118, 126 may retrieve the extension script based in part on a configuration setting. The configuration setting may configure the agent process 118, 126 to always retrieve extension scripts from the extension flow registry 120, to cache retrieved extension scripts in memory of the client 102, 104, 106, 108, 110, to check a version of cached extension scripts versus a current version in the extension flow registry 120 and only downloading a more current version and otherwise utilizing a cached version, and the like. Regardless, agent process 118, 126 retrieves a called extension script.

However, in some instances, an extension script may include calls of other extension scripts therein. For example, a called extension script may include calls of three other extension scripts. When such an extension script is retrieved from a cached version in memory, the agent process 118, 126 may first evaluate the extension script to identify whether there are any other extension scripts referenced therein. When there are, as in this case there are three, the agent process 118, 126 may retrieve the additional three extension scripts in a single manner, in view of the configuration setting regarding extension script retrieval. In some embodiments, when an extension script is retrieved from the extension flow registry 120, a process of the extension flow registry 120 may identify extension script calls included within a requested extension script. When such an identification is made, the process of the extension flow registry 120 may also retrieve and provide the additional extension scripts to the requesting agent 118, 126 along with the requested extension script.

Once the agent process 118, 126 has retrieved the called extension script, and any additional extension scripts that may be called therein, the agent process 118, 126 executes the extension script(s). Note that an extension script may also include calls of one or more of the standard services 116 and other services 112 over the network 112.

Through such embodiments, applications and apps 124 that execute on the clients 102, 104, 106, 108, 110 of the various client types are able to leverage singularly developed and deployed extension script code to augment existing and newly deployed functionality. Commonality and consistency is provided in the data processing regardless of where or on what device-type a transaction is conducted.

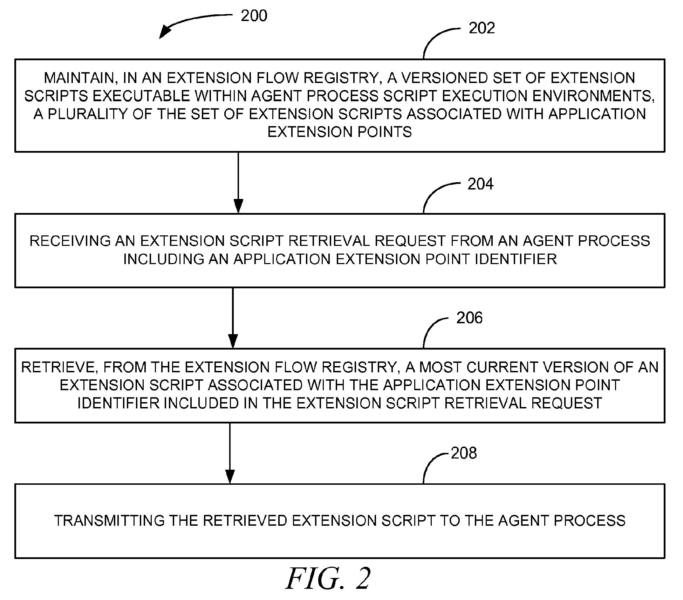

FIG. 2 is a block flow diagram of a method 200, according to an example embodiment. The method 200 is an example of a method that may be performed by an enterprise system 114 that includes an extension flow registry 120 of FIG. 1.

The method 200 includes maintaining 202, in an extension flow registry, a versioned set of extension scripts executable within agent process script execution environments. In such embodiments, a plurality of the set of extension scripts are associated with application extension points. The method 200 also receives 204, via a network interface device of a computer performing the method, an extension script retrieval request from an agent process including an application extension point identifier. The application point identifier is generally a name of an extension script being called, but typically correlates to an app or application extension point from which the extension script retrieval request originated. The method 200 then retrieves 206, from the extension flow registry, a most current version of an extension script associated with the application extension point identifier included in the extension script retrieval request. The retrieved extension script is the transmitted 208 to the requesting agent process via the network interface device.

In some embodiments, a received 204 extension script retrieval request includes a version identifier of an extension script cached by the agent process. The method 200 in such embodiments then compares the received version identifier to a version identifier of the most current version of the extension script associated with the application extension point identifier as maintained in extension flow registry. When the version identifier is equal to the version identifier of the most current version of the requested extension script, the method 200 foregoes the retrieving 206 and transmitting 208 and may instead transmits an indicator that the agent process already possesses the most current version of the requested extension script.

Some embodiments of the method 200 may further identify any additional extension scripts called within the script of the retrieved 206 extension script and then retrieving any identified additional extension scripts. In such embodiments of the method 200, the transmitting 208 of the retrieved extension script includes transmitting any additional extension scripts that have been retrieved.

In some such embodiments, when the extension script includes a plurality of additional extension scripts called therein, the extension script includes an ordered calling of each the plurality of additional extension scripts. The ordered calling of the plurality of additional extension scripts in such embodiments typically includes an association of an output of a prior additional extension script to an input of a subsequent additional extension script.

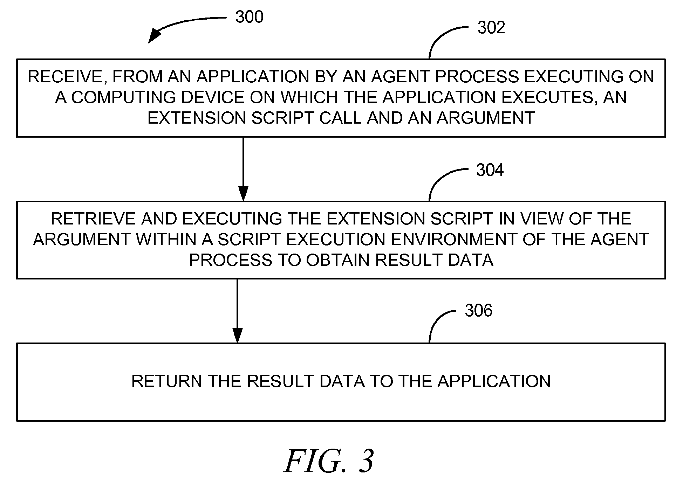

FIG. 3 is a block flow diagram of a method 300, according to an example embodiment. The method 300 is an example of a method that may be performed by an agent process 118, 126 that may be present on the enterprise system 114 and the clients 102, 104, 106, 108, 110.

The method 300 includes receiving 302, from an application, which may be an app that executes on a mobile or other device type, by an agent process executing on a computing device on which the application executes, an extension script call and an argument. The method 300 then retrieves and executes 304 the extension script in view of the argument within a script execution environment of the agent process to obtain result data. The agent process then returns 306 the result data to the application. In some embodiments, the argument is received 302 with the extension script call in a particular format and the result data is returned 306 to the application in the same particular format. In such embodiments, the data is returned 306 in the same format as the calling application expects the data to be in the same particular format for further processing within the application. As such, additional processing on or with regard to the data that may occur when the extension script executes does not disrupt execution of the application.

In some embodiments, the agent process, when retrieving 304 the extension script, retrieves the extension script from a memory of the computing device when the script is cached there. When the extension script is not cached in the memory of the computing device, such embodiments may then retrieve 304 the extension script from an extension flow registry, such as the extension flow registry 120 of FIG. 1. In some such embodiments, the agent process includes a configuration setting identifying when to attempt to retrieve the extension script from the memory device and when to bypass an attempt to retrieve the extension script from the memory. For example, the configuration setting may indicate the agent process is simply to retrieve extension scripts from the extension flow registry every time an extension script is called. In other embodiments, the configuration setting may instruct the agent process to send a retrieval 304 request to the extension flow registry with a version identifier of a version of the extension script cached in the memory. The extension flow registry will then return either a more current version of the extension script or an indication that the cached extension script is the current version.

In some embodiments, the retrieved 304 extension script includes a call of at least one other extension script that also executes within the agent process script execution environment when called. In some such embodiments, the other extension script are returned by the extension flow registry automatically when the extension script is retrieved 304. However, in other embodiments, prior to executing the extension script, the agent process identifies the other extension scripts that are called within the retrieved 304 extension script and then retrieves those other extension scripts. In a further embodiment, the method 300 is executed during execution of the retrieved extension script, but the received 302 extension script call originates and is returned 306 to the agent process.

Some extension scripts that are executed 304 by the agent process may include calls of services over a network. Such services may be made via one or more protocols supported by the agent process or indirectly via another system with which the agent process communicates.

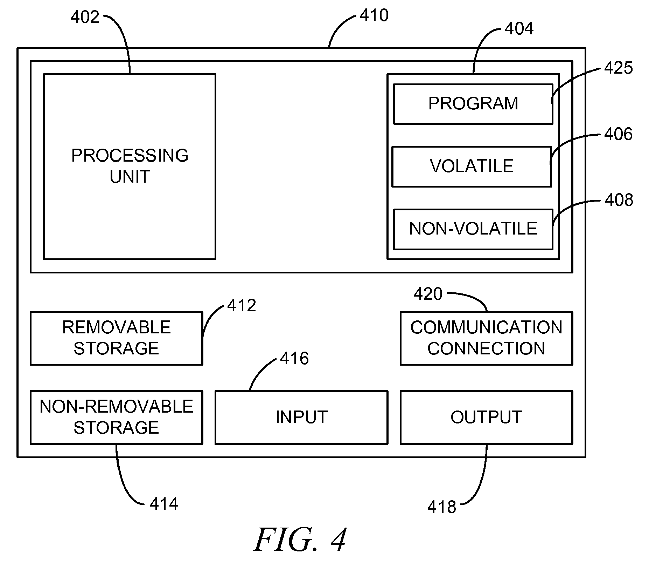

FIG. 4 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components. One example computing device in the form of a computer 410, may include a processing unit 402, memory 404, removable storage 412, and non-removable storage 414. Although the example computing device is illustrated and described as computer 410, the computing device may be in different forms in different embodiments. For example, the computing device may instead be a smartphone, a tablet, smartwatch, or other computing device including the same or similar elements as illustrated and described with regard to FIG. 4. Devices such as smartphones, tablets, and smartwatches are generally collectively referred to as mobile devices. Further, although the various data storage elements are illustrated as part of the computer 410, the storage may also or alternatively include cloud-based storage accessible via a network, such as the Internet.

Returning to the computer 410, memory 404 may include volatile memory 406 and non-volatile memory 408. Computer 410 may include - or have access to a computing environment that includes a variety of computer-readable media, such as volatile memory 406 and non-volatile memory 408, removable storage 412 and non-removable storage 414. Computer storage includes random access memory (RAM), read only memory (ROM), erasable programmable read-only memory (EPROM) and electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 410 may include or have access to a computing environment that includes input 416, output 418, and a communication connection 420. The input 416 may include one or more of a touchscreen, touchpad, mouse, keyboard, camera, one or more device-specific buttons, one or more sensors integrated within or coupled via wired or wireless data connections to the computer 410, and other input devices. The computer 410 may operate in a networked environment using a communication connection 420 to connect to one or more remote computers, such as database servers, web servers, and other computing device. An example remote computer may include a personal computer (PC), server, router, network PC, a peer device or other common network node, or the like. The communication connection 420 may be a network interface device such as one or both of an Ethernet card and a wireless card or circuit that may be connected to a network. The network may include one or more of a Local Area Network (LAN), a Wide Area Network (WAN), the Internet, and other networks. In some embodiments, the communication connection 420 may also or alternatively include a transceiver device, such as a BLUETOOTH® device that enables the computer 410 to wirelessly receive data from and transmit data to other BLUETOOTH® devices.

Computer-readable instructions stored on a computer-readable medium are executable by the processing unit 402 of the computer 410. A hard drive (magnetic disk or solid state), CD-ROM, and RAM are some examples of articles including a non-transitory computer-readable medium. For example, various computer programs 425 or apps, such as one or more applications and modules implementing one or more of the methods illustrated and described herein or an app, application, or module thereof that executes on a mobile device or is accessible via a web browser, may be stored on a non-transitory computer-readable medium.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A method (200) comprising:
maintaining, in an extension flow registry (120), a versioned set of extension scripts executable within agent process script execution environments (118 or 126), a plurality of the set of extension scripts associated with application extension points (step 202);
receiving, via a network interface device of a computer performing the method, an extension script retrieval request from an agent process (118 or 126) including an application extension point identifier (step 204);
retrieving, from the extension flow registry (120), a most current version of an extension script associated with the application extension point identifier included in the extension script retrieval request (step 206);
transmitting, via the network interface device of the computer performing the method, the retrieved extension script to the agent process (118 or 126) (step 208).

2. The method of claim 1, wherein the extension script retrieval request includes a version identifier of an extension script cached by the agent process, the method further comprising:
comparing the version identifier of the extension retrieval request to a version identifier of the most current version of the extension script associated with the application extension point identifier as maintained in the extension flow registry (120);
foregoing the retrieving and transmitting when the version identifier of the extension retrieval request is equal to the version identifier of the most current version of the extension script associated with the application extension point identifier in the extension flow registry (120); and
transmitting, to the agent process (118 or 126) via the network interface device of the computer performing the method, a reply indicating the extension script cached by the agent process (118 or 126) is the current version.

3. The method of claim 1 or 2, further comprising:
identifying any additional extension scripts called within the script of the retrieved extension script;
retrieving any additional extension scripts identified within the script of the retrieved extension script; and
wherein transmitting the retrieved extension script includes transmitting any additional extension scripts that have been retrieved.

4. The method of claim 3, wherein: when the extension script includes a plurality of additional extension scripts called therein, and the extension script includes an ordered call of each the plurality of additional extension scripts; the ordered call of the plurality of additional extension scripts associating an output of a prior additional extension script to an input of a subsequent additional extension script.

5. The method of claim 4, wherein the extension script, when called, receives an argument in a designated form and an output of the extension script is according to the designated form.

6. A system (114) comprising:
at least one network interface device;
at least one processor;
at least one memory; and
an application stored in the at least one memory and executable by the at least one processor to execute processes including extension points, each extension point including an identifier and an extension point call to an agent process (118 or 126) of the application, the agent process (118 or 126) being executable by the at least one processor to provide a script execution environment and to perform data processing activities comprising:
receiving an extension point call with an argument from the application (step 302);
retrieving an extension script associated with the extension point call;
executing the extension script in view of the argument within the script execution environment to obtain result data (step 304); and
returning the result data to the application (step 306).

7. The system of claim 6, wherein: the argument is received in a first format; and the result data is in the first format.

8. The system of claim 6, wherein the agent process (118 or 126), when retrieving the extension script, retrieves the extension script from the at least one memory when the script is cached therein and from an extension flow registry (120) at a network location via the at least one network interface device when the extension script is not cached in the at least one memory, the data processing activities of the agent process (118 or 126) further comprising:
caching the extension script in the at least one memory when retrieved from the extension flow registry (120).

9. The system of claim 8, wherein the agent process (118 or 126) includes a configuration setting instructing the agent process (118 or 126) to bypass an attempt to retrieve the extension script from the at least one memory and instead query the extension flow registry (120) in view of a version identifier of a cached version of the extension script, when cached, to retrieve the extension script only when the at least one memory does contain a cached version of the extension script or the extension flow registry (120) contains a more current version of the extension script than that cached in the at least one memory.

10. The system of any of claims 6 to 9, wherein: the extension script is one of a plurality of extension scripts callable by the application at application extension points, each application extension point associated with one extension script; and at least one application extension script includes no functional script for execution.

11. The system of claim 10, wherein the extension script includes at least one of: a call of at least one other extension script that executes within the agent process script execution environment when called; and a call, made via the at least one network interface device, of at least one service that executes on a networked computing device.
